# EUROPÄISCHE PATENTSCHRIFT

(11) **EP 3 573 021 B1**
(45) Veröffentlichungstag und Bekanntmachung des Hinweises auf die Patenterteilung: **08.07.2020**
(21) Anmeldenummer: 18173463.3
(22) Anmeldetag: 22.05.2018
(51) Int. Cl.: G06T 7/11, G06T 7/136, G06T 7/187

(54) **VISUALISIEREN VON 3D-BILDDATEN**
VISUALISING 3D IMAGE DATA
VISUALISATION DE DONNÉES D'IMAGE TRIDIMENSIONNELLE

(43) Veröffentlichungstag der Anmeldung: 27.11.2019
(73) Patentinhaber: SICK AG, 79183 Waldkirch (DE)
(72) Erfinder: Impera, Davide, 79106 Freiburg (DE); Neumann, Thomas, 79227 Schallstadt (DE)

(56) Entgegenhaltungen:
- EP-A1- 2 275 990
- US-A1- 2006 239 558
- US-A1- 2011 293 137
- FAN ZHENCHENG ET AL: "3D interactive surgical visualization system using mobile spatial information acquisition and autostereoscopic display", JOURNAL OF BIOMEDICAL INFORMATICS, ACADEMIC PRESS, NEW YORK, NY, US, Bd. 71, 19. Mai 2017 (2017-05-19), Seiten 154-164, XP085110045, ISSN: 1532-0464, DOI: 10.1016/J.JBI.2017.05.014

## Beschreibung

Die Erfindung betrifft ein Verfahren zum Visualisieren von 3D-Bilddaten eines 3D-Sensors mit einer Vielzahl von 3D-Punkten nach dem Anspruch 1.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit oder Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

In der Sicherheitstechnik beziehungsweise für den Personenschutz eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile. In sicherheitstechnischen Anwendungen wird typischerweise gefordert, dass ein Objekt mit bestimmter Mindestgröße beziehungsweise bestimmten Mindestabmessungen sicher erkannt wird. Diese Eigenschaft wird als Detektionsvermögen bezeichnet.

Das gängige Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus. Bei einem alternativen sogenannten Speed-and-Separation-Monitoring wird überwacht, ob zwischen Gefahrenstelle und Objekt ein notwendiger Sicherheitsabstand eingehalten wird.

Bei der Einrichtung solcher Sicherheitsanwendungen müssen die Schutzfelder beziehungsweise Gefahrenstellen konfiguriert werden. Dafür ist es hilfreich, wenn der 3D-Sensor eine möglichst leicht und intuitiv erfassbare Visualisierung der beobachteten Szenerie zur Verfügung stellt.

Eine Darstellungsmöglichkeit sind die Tiefenkarten selbst in Form eines 2D-Bildes, in dem die Entfernungen über Grauwerte oder Falschfarben codiert sind. Das ist aber nun gerade keine intuitive, sondern eine künstliche Visualisierung von räumlichen Gegebenheiten, die es Anwendern erschwert, die Szenerie im dreidimensionalen Raum zu beurteilen. Außerdem sind verschattete Bereiche aus der Kameraperspektive nicht sichtbar und auch nicht indirekt vorstellbar. Zudem erscheinen senkrechte Flächen sowohl von tatsächlichen wie von virtuellen, konfigurierten Objekten aufgrund der Zentralperspektive immer verzerrt.

Alternativ ist eine Darstellung als Punktwolke denkbar. Die an sich ausdehnungslosen Punkte werden beispielsweise als dreidimensionale Kugeln, Würfel oder 2D-Sprites gezeigt, d.h. 2D-Flächen, die stets zum Beobachter ausgerichtet sind. Die Punkte liegen voneinander separiert im Raum und überlassen es dem Beobachter, Objekte zu bilden. Es wird keine Oberfläche zwischen Punkten visualisiert, es gibt keine Texturierung. Ungültige Bereiche, in denen keine gültigen Messpunkte vorliegen, bleiben einfach leer und sind als solche kaum erkennbar. Abschattungen können nicht intuitiv im Raum verortet werden.

Bekannt ist weiterhin eine Darstellung als Oberflächenmesh. Jedes von benachbarten Punkten gebildete Viereck wird mit zwei Dreiecken modelliert. Dadurch entsteht eine durchgängige Oberfläche, die auch mit einer Textur versehen werden kann. Ein Oberflächenmesh berücksichtigt aber nicht die Objektgrenzen oder Hintergrunddaten. Es wird eine Oberfläche zwischen allen Punkten modelliert, ungeachtet dessen, ob die Objekte in der Szenerie tatsächlich zusammenhingen. Insbesondere Übergänge zwischen Vordergrundobjekten und Hintergrund sind durch die Zentralperspektive gerade Flächen, obwohl in diesem Bereich der Abschattungsgrenzen gar keine echten Objekte liegen. Tatsächliche Objektoberflächen, Hintergründe und Abschattungsgrenzen werden demnach voneinander ununterscheidbar visualisiert. Das erschwert ein Verständnis der Szenerie und der gemessenen Objekte erheblich.

Die DE10 2005 063 217 B4 offenbart ein Verfahren zum Konfigurieren von Schutzfeldern für eine Stereokamera. Dazu wird ein dreidimensionales Abbild des Raumbereichs aufgenommen und angezeigt. Dabei ist jedoch das Abbild der Szenerie einfach ein zweidimensionales Livebild der Szenerie, in das virtuelle Geometrieelemente eingeblendet werden.

In der US2016/0078610 A1 werden Punktewolken mehrerer Kameras fusioniert. Eine verbesserte Visualisierung wird so aber nicht erreicht.

Aus der US 2016/0307367 A1 ist ebenfalls bekannt, Punktewolken aus mehreren Perspektiven zu kombinieren. Daraus wird dann ein Mesh konstruiert, wobei aber das konkrete Verfahren dafür ausdrücklich offen gelassen wird. Anschließend kann das Mesh noch ausgedünnt werden. Die oben erläuterten Probleme bei der Visualisierung durch ein Oberflächenmesh werden demnach nicht diskutiert oder gar gelöst.

Nach der US 9 235 928 B2 wird ein 3D-Körpermodell aus einer 3D-Punktewolke erzeugt. Dabei werden zylindrische Körpersegmente definiert, was für die allgemeine Beurteilung einer industriellen Szenerie keine sinnvolle Annahme ist.

Die US 7 003 136 B1 befasst sich mit der Objektverfolgung, wobei 3D-Bilddaten in horizontale Ebenen projiziert werden. Als ein Teilschritt ist eine Vordergrundsegmentierung vorgesehen, welche den Hintergrund in Höhen nahe dem Boden abschneidet. Eine intuitive Visualisierung wird aber nicht erreicht und auch gar nicht angestrebt.

Aus der US 2006/0239558 A1 ist ein Verfahren zum Segmentieren von Tiefenkarten bekannt. Dabei werden Segmente aus benachbarten Pixeln gebildet, die zugleich eine ähnliche Tiefe aufweisen. Solche Segmente werden dann als Primitive modelliert, wie Kreise ode Rechtecke, oder als vorgegebene Objekte, wie ein Fahrzeug, eine Person oder ein Tier.

Die US 2011/0293137 A1 offenbart ein Analyseverfahren für dreidimensionale Szenen, um darin Personen und deren Bewegungen zu erkennen. Es werden Segmente (Connected Components) aus Pixeln gebildet, die zueinander benachbart sind und benachbarte Tiefenwerte aufweisen. Mit einem Hintergrundmodell werden Pixel ausgeschlossen, die nicht zu einer Person gehören können.

Es ist daher Aufgabe der Erfindung, die Visualisierung von 3D-Bilddaten eines 3D-Sensors zu verbessern.

Diese Aufgabe wird durch ein Verfahren zum Visualisieren von 3D-Bilddaten eines 3D-Sensors mit einer Vielzahl von 3D-Punkten nach Anspruch 1 sowie einen entsprechenden 3D-Sensor nach Anspruch 13 gelöst. Der 3D-Sensor erfasst Abstände zu Objekten in einem Überwachungsbereich. Die dabei erzeugten 3D-Punkte bilden lateral, also quer zur Erfassungsrichtung des 3D-Sensors, eine 2D-Anordnung, da der Sensor je Sichtstrahl nur einen Abstand misst. Die Koordinaten der lateralen 2D-Anordnung aus Sicht des Sensors werden im Folgenden mit (u,v) bezeichnet. Ein typisches Beispiel ist eine Tiefenkarte, also eine 2D-Matrix entsprechend den Pixeln im Bild eines herkömmlichen 2D-Bildsensors, mit der Besonderheit, dass die Pixel (u,v) Tiefenwerte entsprechend den gemessenen Abständen repräsentieren. Verbundene 3D-Punkte werden in zusammenhängenden Segmenten zusammengefasst (CCL, Connected Components Labeling) und diese Segmente dann angezeigt.

Die Erfindung geht von dem Grundgedanken aus, die Segmentierung durch eine Höhenschwelle zu erweitern. Potentiell in einem Segment verbunden sind Nachbarn in der lateralen 2D-Anordnung, insbesondere Nachbarpixel in der Tiefenkarte. Es wird dann jedoch eine Zusatzbedingung in Abhängigkeit von den Tiefenwerten gestellt. Nachbarn gehören demnach nur dann zum selben Segment, wenn sich die Tiefenwerte höchstens um eine Tiefenschwelle voneinander unterscheiden. Da die Tiefenrichtung regelmäßig als Z-Achse bezeichnet ist, kann das erfindungsgemäß erweiterte Verfahren als Δz-limitiertes Connected Components Labeling bezeichnet werden.

Die Erfindung hat den Vorteil, dass eine ansprechende und flüssige dreidimensionale Visualisierung von 3D-Bilddaten ermöglicht wird. Dabei werden Objekte plausibel segmentiert dargestellt und können intuitiv in der dreidimensionalen Szenerie verortet werden. Die visuelle Aufbereitung ist effizient, flexibel und schnell. Außerdem lässt sich die Visualisierung gut mit zusätzlichen Daten erweitern, etwa einer Texturierung, einer Abschattungsdarstellung sowie Applikations-, Konfigurations- oder weiterer Messdaten. Das Verfahren ist nicht abhängig von einer Plattform und somit in beliebigen Umgebungen implementierbar, wie auf einem Desktop-PC, in einem Webbrowser oder als eingebettete Software in dem 3D-Sensor oder einer daran angeschlossenen Steuerung. Die Perspektive ist vorzugsweise frei wählbar.

3D-Punkte sind vorzugsweise dann lateral benachbart, wenn sie innerhalb der 2D-Anordnung nebeneinander, übereinander oder in diagonaler Nachbarschaft angeordnet sind. In die Nachbarschaftsbeziehung bei der Segmentierung gehen also die direkten und diagonalen Nachbarn ein, vorzugsweise alle. Bei einer Tiefenkarte mit regulärem Raster der lateralen 2D-Anordnung ist das eine Achternachbarschaft. Es hat sich gezeigt, dass dadurch besonders ansprechende Ergebnisse erzielt werden, bessere beispielsweise als in einer an sich auch denkbaren Vierernachbarschaft beziehungsweise Nachbarschaft nur der direkten Nachbarn ohne diagonale Nachbarn.

Für ein zusammenhängendes Segment wird ein Oberflächenmesh gebildet und das Segment als das zugehörige Oberflächenmesh angezeigt. Durch ein Oberflächenmesh, insbesondere Dreiecksmesh der gefundenen Segmente, wird die Zusammengehörigkeit in einem Objekt intuitiv erfassbar, ganz anders als bei einer Punktewolke. Wegen der vorausgegangenen Δz-limitierten CCL-Segmentierung werden nur relevante Oberflächen gezeigt. Verwirrende Flächendarstellungen an Übergängen zwischen Objekten oder Objekt und Hintergrund wie bei herkömmlichen Oberflächenmeshs gibt es nicht. Soweit solche Übergänge doch angezeigt werden, insbesondere Abschattungen, so ist der Visualisierung bewusst, dass es sich hier nicht um Objektflächen handelt, die demnach in besonderer Weise dargestellt werden können, so dass ihre Natur sofort erkennbar wird, oder die wahlweise auch ausgeblendet werden.

Vorzugsweise werden Dreiecke des Oberflächenmeshs aus 3D-Punkten gebildet, die schon in der lateralen 2D-Anordnung Dreiecke aus direkten Nachbarn bilden. In den eingeführten Koordinaten unterscheiden sich also die Koordinaten solcher Dreiecke (u,v) nur um Eins, wie etwa bei dem Dreieck (u,v), (u+1,v), (u,v+1). In dem Dreieck des Oberflächenmeshs ist natürlich auch der jeweilige Tiefenwert an den drei Punkten des Dreiecks einbezogen.

Es wird ein Abschattungsmesh für Abschattungsgrenzen erzeugt und angezeigt. Die bisher diskutierten Oberflächenmeshs entsprechen den zusammenhängenden Segmenten und damit Objekten. Gerade für Sicherheitsanwendungen ist aber wichtig, auch Abschattungen (Verdeckungen, Okklusionen) zu erkennen und in der Szenerie dreidimensional einzuordnen, weil der 3D-Sensor hier blind ist. Oberflächenmeshs und Abschattungsmeshs sind visuell unterscheidbar, insbesondere durch unterschiedliche Farben, Texturen oder besonders vorteilhaft eine (teil)transparente Darstellung des Abschattungsmeshs.

Vorzugsweise wird eine Kantenmaske von inneren und äußeren Kanten der Segmente erzeugt, und Dreiecke des Abschattungsmeshs werden auf Basis der Kantenmaske zwischen benachbarten, unterschiedlichen Segmenten gebildet. Abschattungen liegen jeweils an äußeren Objektkanten, so dass Dreiecke des Abschattungsmeshs benachbarte Kanten von unterschiedlichen zusammenhängenden Segmenten verbinden. Deshalb werden die Eckpunkte der Dreiecke des Abschattungsmeshs durch eine solche Kantenmaske leicht und zuverlässig identifiziert. Der Hintergrund oder Boden ist in diesem Zusammenhang bevorzugt als eigenes zusammenhängendes Segment definiert, weil manche Dreiecke des Abschattungsmeshs auch Objektkanten mit dem Hintergrund verbinden.

Das Mesh wird bevorzugt mit einer Textur angezeigt. Dies gilt für ein Oberflächen- und/oder ein Abschattungsmesh. Die Dreiecke erhalten dabei eine Textur, die vorzugsweise durch Grauwerte oder Falschfarben Tiefenwerte codiert. Dabei sind sowohl einfarbige Dreiecke beispielsweise entsprechend dem Tiefenwert eines Schwerpunkts des Dreiecks als auch tiefenwertabhängige Verläufe in dem Dreieck vorstellbar. Die so noch genauer erfassbare dreidimensionale Information ist für die Konfiguration des 3D-Sensors besonders hilfreich. Alternativ ist aber auch eine Textur entsprechend der tatsächlichen Szenerie aus einer Bildaufnahme denkbar, denn das erleichtert die Orientierung an der realen Szenerie. Das Versehen eines Meshs mit Textur ist vorzugsweise ein später oder gar abschließender Schritt, damit fertige Meshs vorliegen.

Die 3D-Punkte werden bevorzugt in Weltkoordinaten transformiert. Zunächst werden 3D-Punkte aus der Perspektive des 3D-Sensors erfasst. In der bisherigen Nomenklatur sind dies Tupel (u,v,d), wobei d der jeweils an der Stelle (u,v) gemessene Abstand ist. Es kann ungültige Entfernungswerte (Fehlstellen, Löcher, Lücken) geben, wo kein zuverlässiger Abstand vorliegt. Durch die Transformation, die eine bekannte oder kalibrierte Position und Perspektive des 3D-Sensors berücksichtigt, erfolgt eine Umrechnung in Weltkoordinaten. Vorzugsweise sind die Weltkoordinaten kartesische Koordinaten, so dass 3D-Punkte (x,y,z) entstehen. Die z-Koordinate entspricht bevorzugt einer Höhenachse senkrecht zu einer Grundfläche wie dem Boden bei einer Höhe z=0. Aufgrund der Umrechnungsmöglichkeit wird in dieser Beschreibung nicht überall sauber zwischen von dem 3D-Sensor gemessenen Tiefenwerten und Höhen z unterschieden. So kann insbesondere die Tiefenschwelle der Δz-limitierten CCL-Segmentierung eine Höhenschwelle über einer Grundfläche sein.

Vorzugsweise werden 3D-Punkte verworfen, deren Tiefenwert keiner Mindesthöhe über einer Grundfläche entspricht. Das ist eine einfache Hintergrundsegmentierung noch auf Basis von 3D-Punkten. Vorzugsweise erfolgt dies nach einer Transformation in Weltkoordinaten, denn dann handelt es sich um eine einfache z-Schwellenoperation mit konstanter Schwelle. Prinzipiell ist auch eine vom lateralen Ort (u,v) oder der Grundfläche (x,y) abhängige Höhenschwelle vorstellbar, um die Zentralperspektive der Koordinaten (u,v,d) und/oder einen nicht ebenen Hintergrund zu berücksichtigen. Durch die Hintergrundsegmentierung kann der Anwender den Vordergrund vom Hintergrund unterscheiden. Es wäre denkbar, den Hintergrund nicht ganz zu ignorieren, sondern deutlich unterscheidbar anzuzeigen. Jedenfalls kann der Anwender den Vordergrund klar und ohne Verwechslung mit Hintergrund erkennen.

Vorzugsweise werden zusammenhängende Segmente verworfen, die keine Mindesthöhe über einer Grundfläche erreichen. Dies ist eine andere Hintergrundsegmentierung nun auf Basis von zusammenhängenden Segmenten, also nach der Δz-limitierten CCL-Segmentierung. Es werden nicht nur einzelne 3D-Punkte, sondern ganze Segmente verworfen, die als Hintergrund angesehen werden. Dabei wird die Höhe eines Segments beispielsweise an dessen Durchschnitt, Schwerpunkt oder höchstem Punkt gemessen. Die beiden Hintergrundsegmentierungen können gar nicht, einzeln oder kombiniert eingesetzt werden.

Vorzugsweise werden Fehlstellen in der lateralen 2D-Anordnung, zu denen der 3D-Sensor keinen gültigen Tiefenwert gemessen hat, mit 3D-Punkten aufgefüllt, deren Tiefenwert aus Tiefenwerten von benachbarten 3D-Punkten bestimmt wird. Das ist ein optionaler Vorverarbeitungsschritt vor der Δz-limitierten CCL-Segmentierung, um die Auswirkungen der bereits angesprochenen Fehlstellen, Löcher oder Lücken in den 3D-Bilddaten auf die Visualisierung zu beschränken. Dazu werden ungültige Abstände mit Informationen der Umgebung ersetzt, sei es, indem direkt der Abstandswert eines Nachbarn übernommen, zwischen Abstandswerten der Nachbarn gemittelt oder allgemein die Tiefenkarte mit einem interpolierenden Filterkern bearbeitet wird. Für eine Sicherheitsauswertung käme eine solche Interpolation nicht in Betracht, weil die Gesundheit von Personen nicht von Spekulationen über Blindbereiche der Messung abhängen darf, aber eine ansprechende Visualisierung kann dadurch sehr wohl weiter verbessert werden.

Die Auflösung der lateralen 2D-Anordnung wird vorzugsweise reduziert, indem aus den 3D-Punkten eine kleinere Anzahl von 3D-Punkten erzeugt wird. Jeweils mehrere benachbarte 3D-Punkte der ursprünglichen Auflösung bestimmen den Abstandswert eines 3D-Punktes in der verringerten Auflösung. Dabei ist eine Interpolation beziehungsweise ein Filter mit Gewichten der Anteile der ursprünglichen 3D-Punkte denkbar. Dadurch können aber Kanten verwaschen werden, so dass gerade bei stark unterschiedlichen benachbarten Abstandswerten vorzugsweise einer der weit auseinanderliegenden Abstandswerte beibehalten wird, um die Kante zu erhalten. Die reduzierte Auflösung (Downsampling) verringert den Aufwand für die Visualisierung. Besonders bevorzugt erfolgt die Reduktion in Abhängigkeit von aktuell verfügbaren Rechenkapazitäten und/oder dem Aufwand für das Visualisieren der aktuell aufgenommenen 3D-Bilddaten. Diese Anpassung erfolgt für eine längere Betriebsphase oder sogar dynamisch in Abhängigkeit von der aktuellen Komplexität der Szenerie. So kann eine flüssige Darstellung bei begrenzten Ressourcen aufrechterhalten werden.

Die Visualisierung erfolgt vorzugsweise während der Aufnahme oder Übertragung von 3D-Bilddaten. Es ist demnach eine Darstellung in Echtzeit oder zumindest eine echtzeitnahe Darstellung möglich, denn eine gewisse Latenz ist fast unvermeidbar. So wird beispielsweise ein Livestream visualisiert, und zwar aufgrund des erfindungsgemäßen Verfahrens mit vertretbarem Aufwand auch bei flüssigen Frameraten von mindestens zehn Bildern/Sekunde. Natürlich kann ein Bildstrom auch zeitversetzt nach der Aufnahme übertragen werden.

Die 3D-Bilddaten werden bevorzugt von einer 3D-Kamera aufgenommen, insbesondere einer Stereokamera. Auch ein Laserscanner ist ein 3D-Sensor, denn er erzeugt 3D-Punktwolken, die bei einem klassischen Laserscanner auf eine Abtastebene beschränkt sind. Durch in Elevation bewegte Abtastung oder mehrere in Elevation versetzte Abtaststrahlen entfällt diese Beschränkung bei einem Laserscanner. Bevorzugt ist aber eine 3D-Kamera, die zunächst jede bekannte Technik verwenden kann, wie ein Lichtlaufzeitprinzip mit direkter Laufzeitmessung von Lichtsignalen oder Phasenmessung oder eine Entfernungsschätzung aus Helligkeiten oder Fokuslagen (DFF, Depth from Focus, DFD, Depth from Defocus). Besonders bevorzugt nutzt die 3D-Kamera aber ein Triangulationsprinzip, bei dem zwei Kamerabilder einer bewegten Kamera oder einer Stereokamera untereinander korreliert werden, oder alternativ ein Beleuchtungsmuster mit einem Kamerabild korreliert wird, um so Disparitäten zu schätzen und daraus Abstände zu bestimmen.

Ein erfindungsgemäßer optoelektronischer 3D-Sensor weist mindestens einen Lichtempfänger oder Bildsensor zur Erfassung von 3D-Bilddaten aus einem Überwachungsbereich, eine Steuer- und Auswertungseinheit und eine Anzeige zum Darstellen der 3D-Bilddaten auf. In der Steuer- und Auswertungseinheit ist ein erfindungsgemäßes Verfahren zum Visualisieren erfasster 3D-Bilddaten in einer beliebigen der vorgestellten Ausführungsformen implementiert. Sowohl Steuer- und Auswertungseinheit als auch Anzeige können wahlweise im selben Gehäuse des 3D-Sensors oder zumindest teilweise extern vorgesehen sein. Der 3D-Sensor ist vorzugsweise sicher, also für eine sicherheitstechnische Anwendung ausgelegt, und erfüllt dafür die einleitend genannten oder entsprechende Normen, um eine gefahrbringende Maschine abzusichern. Der 3D-Sensor kann eine 3D-Kamera oder ein sonstiger 3D-Sensor insbesondere wie im vorangehenden Absatz aufgeführt sein.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer 3D-Kamera und ihres Überwachungsbereich;
- Fig. 2: eine Seitenansicht einer beispielhaften Überwachungssituation der 3D-Kamera;
- Fig. 3: eine beispielhafte Tiefenkarte, welche die 3D-Kamera in der Überwachungssituation der Figur 2 erzeugt;
- Fig. 4: ein beispielhaftes Ablaufschema zur Erzeugung einer 3D-Visualisierung aus einer Tiefenkarte;
- Fig. 5: ein beispielhafter Ausschnitt einer Tiefenkarte und eine dafür mittels Δzlimitiertem CCL erzeugte Segmentierung;
- Fig. 6a: eine zweidimensionale Darstellung von Oberflächenmeshs für die zusammenhängenden Segmente gemäß der Segmentierung aus Figur 5;
- Fig. 6b: eine zweidimensionale Darstellung von Abschattungsmeshs durch zusammenhängende Segmente gemäß der Segmentierung auf Figur 5;
- Fig. 7: eine beispielhafte dreidimensionale Darstellung eines Oberflächenmeshs;
- Fig. 8: eine Seitenansicht der beispielhaften Überwachungssituation aus Figur 2 mit zusätzlichen Sichtlinien der 3D-Kamera;
- Fig. 9a: eine Darstellung der Oberflächenkontur in der Überwachungssituation der Figur 8;
- Fig. 9b: eine Darstellung der mittels Δz-limitiertem CCL aufgefundenen zusammenhängenden Segmente für die Überwachungssituation der Figur 8;
- Fig. 9c: eine Darstellung wie Figur 9b, jedoch zusätzlich mit Abschattungen in gestrichelten Linien;
- Fig. 10: ein beispielhaftes Ablaufschema zur Erzeugung einer 3D-Visualisierung mit zwei optional möglichen Hintergrundsegmentierungen;
- Fig. 11a: eine Seitenansicht einer beispielhafte Oberfläche ohne Hintergrundsegmentierung;
- Fig. 11b: eine Seitenansicht der Oberfläche gemäß Figur 11a mit Hintergrundsegmentierung mittels einer Höhenschwellenbewertung der 3D-Punkte;
- Fig. 11c: eine Seitenansicht der Oberfläche gemäß Figur 11a mit Hintergrundsegmentierung mittels einer Höhenschwellenbewertung der zusammenhängenden Segmente;
- Fig. 12: ein beispielhaftes Ablaufdiagramm zur Erläuterung eines vorbereitenden optionalen Auffüllens von Tiefenkarten beziehungsweise Downsamplings;
- Fig. 13: ein beispielhaftes Ablaufdiagramm zur Erläuterung eines optionalen Erzeugens zusätzlicher Abschattungsmeshs sowie der Texturierung von Meshs;
- Fig. 14: eine beispielhafte Visualisierung von 3D-Bilddaten ohne Δz-limitiertes CCL;
- Fig. 15: eine beispielhafte Visualisierung der 3D-Bilddaten gemäß Figur 14 mit Δzlimitiertem CCL; und
- Fig. 16: eine beispielhafte Visualisierung der 3D-Bilddaten gemäß Figur 15, jedoch zusätzlich mit Hintergrundsegmentierung und Darstellung von Abschattungsmeshs.

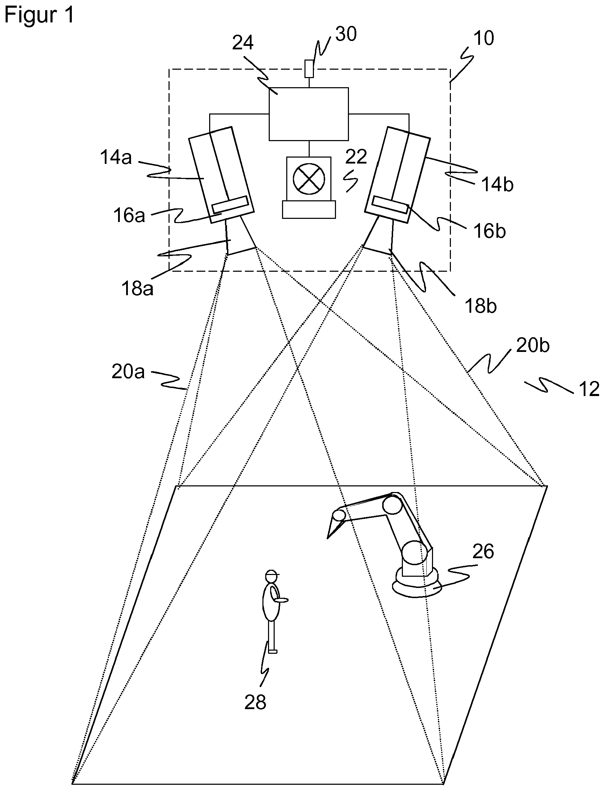

Figur 1 zeigt in einer schematischen dreidimensionalen Darstellung den allgemeinen Aufbau einer Stereokamera 10 zur Aufnahme einer Tiefenkarte. Die Stereokamera 10 ist fehlersicher im Sinne von Sicherheitsnormen wie den einleitend genannten ausgelegt. Die Stereokamera 10 ist nur ein Beispiel für einen erfindungsgemäßen 3D-Sensor, an dem die Erfassung von 3D-Bilddaten erläutert wird. Ebenso denkbar wären andere 3D-Kameras mit Erfassungsprinzipien wie Korrelation von Bild und projizierten Beleuchtungsmustern oder Bestimmung der Lichtlaufzeit sowie Laserscanner.

Zur Erfassung eines Raumbereichs 12 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 oder auch Arbeitsbereich kann über eine Konfiguration eingeschränkt werden, beispielsweise um störende oder nicht notwendige Bereiche auszublenden.

Eine wichtige sicherheitstechnische Anwendung der Stereokamera 10 ist die Überwachung einer Maschine 26, die in der Figur 1 durch einen Roboter symbolisiert ist. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Die Steuer- und Auswertungseinheit 24 prüft, wo sich ein Objekt 28, dargestellt als Person, in Bezug auf die Maschine 26 befindet.

Dazu wird vorteilhaft die Maschine 26 als Gefahrenstelle modelliert. Das ist ein Raumbereich, in dem die Maschine 26 in einem jeweiligen Zeitabschnitt Arbeitsbewegungen ausführt. Die Gefahrenstelle kann die Maschine 26 mit etwas Abstand umgeben, um den Arbeitsbewegungen ausreichend Spiel zu lassen. Außerdem ist es für die Berechnungen vorteilhaft, geometrisch einfache Gefahrenstellen wie Quader oder Kugeln zu definieren, wofür dann gewisse Leerräume in Kauf genommen werden. Mehrere Gefahrenstellen umgeben bei Bedarf mehrere Maschinen und/oder mehrere bewegliche Teilabschnitte einer Maschine. Gefahrenstellen können starr sein und sämtlich denkbare Arbeitsbewegungen umfassen. Alternativ sind jeweils Gefahrenstellen für Teilabschnitte der Arbeitsbewegung definiert, die in einer dem Prozess entsprechenden Abfolge benutzt werden und die kleiner und besser angepasst sind.

Die Steuer- und Auswertungseinheit 24 bestimmt den kürzesten Abstand aller Objekte 26 zu den jeweiligen Gefahrenstellen. Über eine sichere Schnittstelle 30 wird der kürzeste Abstand ausgegeben, entweder direkt an die Maschine 26 oder an eine Zwischenstation wie eine sichere Steuerung. Die an die sichere Schnittstelle 30 angeschlossene Steuerung, sei es eine übergeordnete Steuerung oder diejenige der Maschine 26, wertet den kürzesten Abstand zur Erfüllung einer Sicherheitsfunktion aus, zum Beispiel eines Speed-and-Separation Monitoring nach ISO/TS 15066, und vergleicht dazu den kürzesten Abstand mit einem erforderlichen Sicherheitsabstand etwa nach ISO 13855. Im Gefährdungsfall wird eine sicherheitsgerichtete Reaktion eingeleitet, um beispielsweise die Maschine 26 anzuhalten, abzubremsen oder ausweichen zu lassen. Ob dies erforderlich ist, kann neben dem kürzesten Abstand von weiteren Bedingungen wie den Geschwindigkeiten oder der Beschaffenheit von Objekt 28 und Maschinenbereich 26 der drohenden Kollision abhängen.

Alternativ zu der zweistufigen Ausgabe von kürzesten Abständen und deren nachgelagerter Bewertung ist auch eine herkömmliche Schutzfeldauswertung in der Stereokamera 10 oder einer daran angeschlossenen Steuerung mit Ausgabe eines binären sicherheitsgerichteten Signals denkbar.

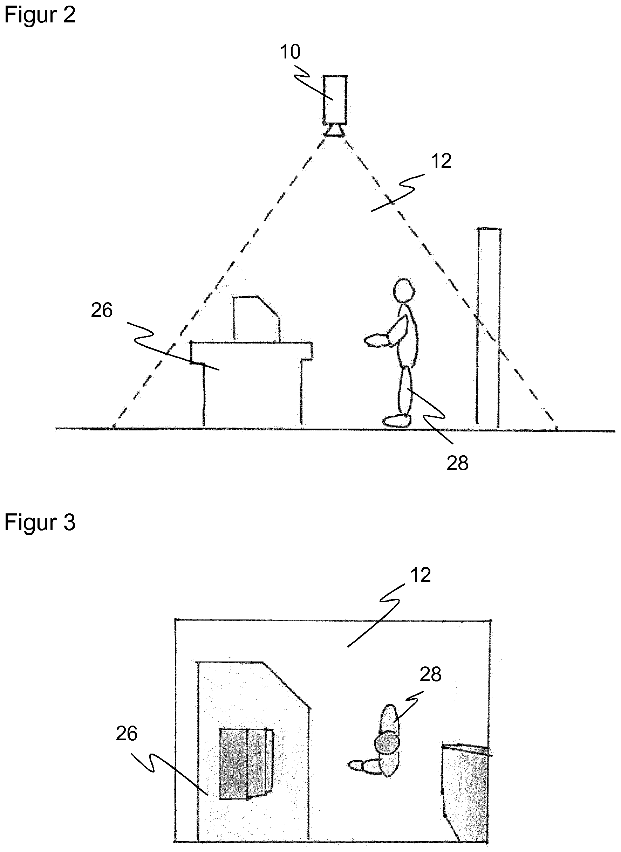

Figur 2 zeigt eine schematische Seitenansicht einer rein beispielhaften Überwachungssituation. Die Stereokamera 10 ist nach unten gerichtet über dem zu beobachtenden Raumbereich 12 montiert. Die optische Achse zeigt senkrecht nach unten, wobei eine gewisse Neigung möglich ist. Die Überwachung aus der Vogelperspektive ist besonders vorteilhaft, die Erfindung darauf aber nicht beschränkt. Bei einer anderen Montage sind die Angaben einer Höhe auf eine andere Grundfläche als den Boden zu beziehen oder entsprechend der abweichenden Perspektive zu transformieren.

Figur 3 zeigt eine mit der Stereokamera 10 aufgenommene Tiefenkarte des Raumbereichs 12 gemäß Figur 2 mit einer Grauwertcodierung für den jeweils gemessenen Abstand d. Je nach 3D-Sensor, Sichtbereichen und Messprinzip kann die regelmäßige Rasteranordnung durch eine andere laterale 2D-Anordnung ersetzt sein.

Eine Stereokamera 10 kann keine echten 3D-Bilddaten erzeugen, da der jeweils nächste Objektpunkt je Sichtstrahl die dahinter liegenden Strukturen verdeckt. Das wird manchmal auch als 2.5D-Bilddaten bezeichnet, die aber hier weiterhin 3D-Bilddaten genannt werden. Eine Tiefenkarte ist also ein zweidimensionales Bild mit Koordinaten, die hier mit (u,v) bezeichnet sind, und jedes Pixel enthält einen Wert d für den dort gemessenen Abstand. Da die Stereokamera 10 die beiden versetzten Kameramodule 14a, 14b aufweist, gibt es aufgrund der Parallaxe Bereiche, die sich nur im Sichtfeld von einem der beiden Kameramodule 14a, 14b befinden. Das geschieht nicht nur in Randbereichen, sondern auch hinter Objektkanten, die gegenüber einem der beiden Kameramodule 14a, 14b abschatten. Hinzu kommt die bereits angesprochene Abschattung oder Okklusion aufgrund der Zentralperspektive. Schließlich kann es auch Korrelationsfehler des Stereoalgorithmus' geben, etwa an Stellen mit zu wenig Kontrast. Die Tiefenkarte ist deshalb nicht immer vollständig, sondern kann Fehlstellen oder Löcher aufweisen.

Eine Tiefenkarte wie in Figur 3 stellt prinzipiell eine Visualisierung der 3D-Bilddaten der Stereokamera 10 dar. Allerdings ist sie nicht besonders verständlich, vor allem wenn man bedenkt, dass in der Praxis die Szenerie deutlich komplexer ist und die einzelnen Objekte keineswegs so klar abgegrenzt in der Tiefenkarte erscheinen wie in dem einfachen Beispiel. Für die Konfiguration der Stereokamera 10 und gegebenenfalls daran angeschlossener Systeme, insbesondere von Gefahrenstellen, Schutzfeldern oder dergleichen, wünscht man sich eine bessere Visualisierung von 3D-Bilddaten, die ein möglichst intuitives und genaues räumliches sowie gegebenenfalls auch zeitliches Verständnis der Messwerte ermöglichen. Das ist aber mit einer Tiefenkarte mit Grauschattierungen wie in Figur 3 schlecht möglich, da es schwer fällt oder gar nicht möglich ist, sich die Höhenkonturen und Objekte, erst recht die relevanten Abschattungen, bei dieser Visualisierung richtig vorzustellen.

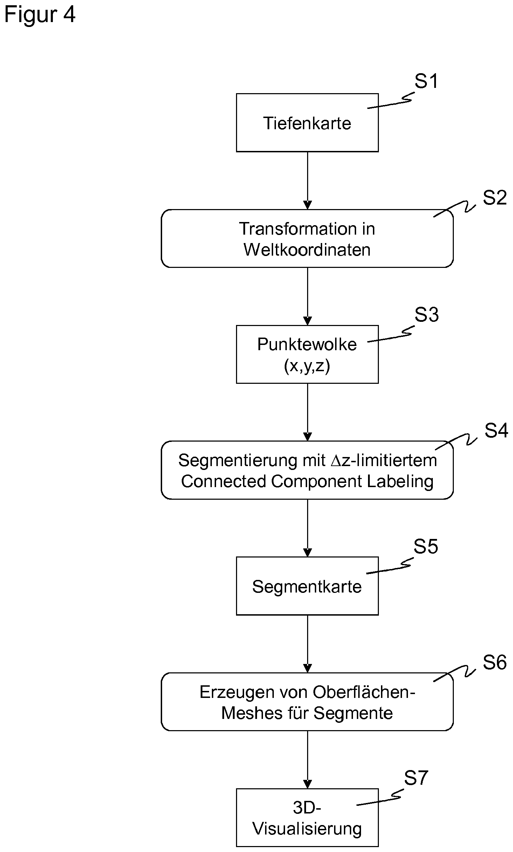

Figur 4 zeigt ein beispielhaftes Ablaufschema für ein Verfahren zur Visualisierung von 3D-Bilddaten. Ausgangspunkt im Schritt S1 sind die Messwerte der Stereokamera 10, also Tupel (u,v,d) mit jeweils einem Tiefenwert pro lateralem Bildpunkt, d.h. eine Tiefenkarte, wie sie mit Grauwerten in Figur 3 gezeigt ist. Die Tupel bilden im (u,v)-Raum ein gleichmäßiges Raster, aber das Verfahren ist darauf nicht zwingend angewiesen. Die Auflösung der Tiefenkarte entspricht maximal der Auflösung eines einzelnen Kamerabildes. Zur Vereinfachung wird vorerst davon ausgegangen, dass es keine Fehlstellen oder Löcher gibt. Fehlstellen bedürfen einer gesonderten sicherheitstechnischen Behandlung. Optional können reproduzierbar auftauchende Fehlstellen gesondert visualisiert werden.

Die Messwerte (u,v,d) liegen anfangs in Kamerakoordinaten vor. In einem Schritt S2 werden sie in Weltkoordinaten überführt, vorzugsweise in kartesische Tripel (x,y,z) des 3D-Raumes. Die dafür nötige Transformation ergibt sich aus der Lage der Stereokamera 10 im Raum einschließlich ihrer Orientierung und der Abbildungsgeometrie. Die entsprechende Kalibrierung ist nicht nur für die Visualisierung erforderlich, sondern auch für die Überwachungsaufgabe der Stereokamera 10.

Nach der Transformation ist in einem Schritt S2 aus jedem ursprünglichen (u,v,d)-Tupel ein kartesisches (x,y,z)-Tupel geworden. Der Ursprung des 3D-Koordinatensystems ist weitgehend frei wählbar. Es ist allerdings vorteilhaft und wird im Folgenden angenommen, dass die z-Koordinate senkrecht zum tatsächlichen Boden nach oben gerichtet ist und am Boden den Wert z=0 hat.

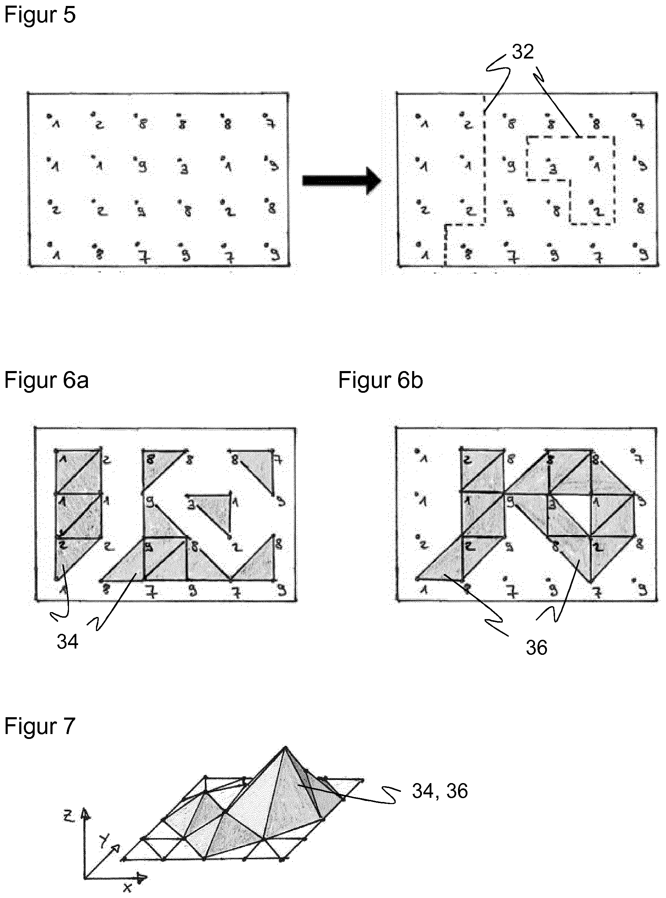

In einem Schritt S4 folgt nun eine besondere Segmentierung der Tiefenkarte, um die Objekte zu identifizieren. Figur 5 zeigt im linken Teil einen vereinfachten Ausschnitt nochmals darauf hingewiesen, dass die dargestellten Tiefenkarten nun in (x,y,z)-Koordinaten vorliegen, die Höhenwerte sind demnach die z-Werte an den jeweiligen Positionen (x,y).

Diese Punktmenge wird im Schritt S4 durch ein angepasste Connected-Components-Labeling-Verfahren (CCL) segmentiert. Als potenziell verbunden werden bezüglich (x,y) benachbarte Punkte in Betracht gezogen. Dies kann wahlweise mit Konnektivität vier oder acht ausgeführt werden, d.h. die diagonale Nachbarschaft einbezogen sein oder nicht. Es hat sich aber erwiesen, dass mit einer Achternachbarschaft bessere Ergebnisse erzielt werden.

Als zusätzliche Bedingung für eine Zusammengehörigkeit von zwei Punkten wird nun noch eine Δz-Limitierung herangezogen und dafür die Differenz der z-Komponente der beiden Punkte herangezogen. Überschreitet diese Differenz einen festzulegenden Höhenschwellenwert, der je nach Betrachtung auch Tiefenschwellenwert genannt wird, so gehören die potenziell verbundenen beiden Punkte trotz ihrer lateralen Nachbarschaft nicht zum selben Segment. Motiviert ist die Δz-Limitierung durch einen Plausibilitätsansatz, nämlich dass entlang der Sichtachsen der Stereokamera 10 größere Sprünge von Tiefenwerten in aller Regel auf Objektkanten und damit auf separate Objekte im Raum zurückzuführen sind.

In einem Schritt S5 ist auf diese Weise eine Segmentkarte gewonnen worden. Figur 5 zeigt beispielhaft im rechten Teil die entstehenden zusammenhängenden Segmente 32 nach Δz-limitiertem Connected-Components-Labeling mit einer Höhenschwelle Δz < 4. Diese besondere Art der Segmentierung eignet sich für eine Stereokamera 10 besonders. Denn durch das Stereoverfahren entstehen typischerweise entlang von Objektkanten Fehlstellen. Segmente werden also zusätzlich durch solche künstlichen Kanten aus Fehlstellen abgegrenzt. Dies trifft vor allem in der Nähe der optischen Achse zu, wo Fehlstellen an Objekträndern durch die Parallaxe der beiden Kameramodule 14a, 14b begünstigt werden.

In einem Schritt S6 werden zu den jeweiligen zusammenhängenden Segmenten 32 Oberflächenmeshs 34 erzeugt. Das ist in Figur 6a beispielhaft für die Segmente 32 aus Figur 5 gezeigt. Figur 6b zeigt entsprechende Abschattungsmeshs 36 für abgeschattete Bereiche zwischen äußeren Kanten der Segmente 32, die weiter unten noch etwas genauer erläutert werden.

Ein Oberflächenmesh 34 besteht aus Dreiecken, so dass jeweils drei Punkte zu ermitteln sind, zwischen denen ein Mesh-Dreieck erzeugt wird. Dazu wird hier ganz einfach die anfängliche laterale 2D-Anordnung der Messpunkte in der ursprünglichen Tiefenkarte, d.h. deren (u,v)-Koordinate herangezogen. Darin werden direkte Nachbarn zu Dreiecken verbunden. Ein Dreieck entsteht so beispielsweise zwischen (u,v), (u+1,v) und (u,v+1). In dem Oberflächenmesh 34 bleibt es natürlich nicht bei zweidimensionalen Koordinaten (u,v)n, sondern es werden die zugehörigen dreidimensionalen Koordinaten (x,y,z) verwendet. Durch die regemäßige Gitterstruktur kann auf komplexe Meshing-Verfahren wie beispielsweise Delaunay-Triangulation verzichtet werden.

In einem Schritt S7 werden die Oberflächenmeshs 34 und gegebenenfalls die Abschattungsmeshs 36 angezeigt, um so die 3D-Bilddaten intuitiv zu visualisieren. Figur 7 zeigt rein beispielhaft die Darstellung für ein Mesh 34, 36.

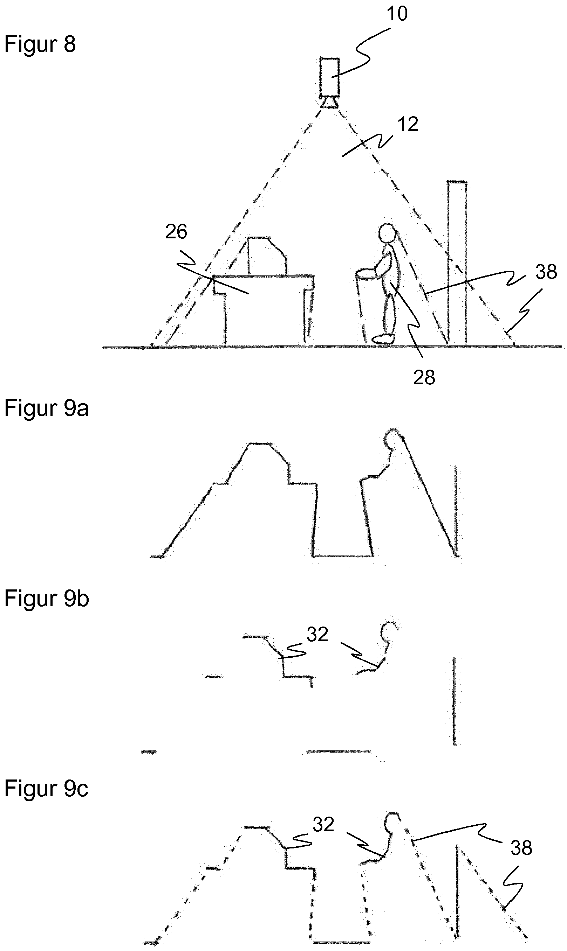

Die Figuren 8 und 9a-c illustrieren das unter Bezugnahme auf Figur 4 erläuterte Verfahren noch einmal in einer anderen Darstellung, nämlich einer Schnittansicht von der Seite. Figur 8 entspricht der beispielhaften Darstellung einer Überwachungssituation gemäß Figur 2, wobei hier noch die optischen Sichtachsen 38 der Stereokamera 10 als gestrichelte Linien ergänzt sind, um die Abschattung besser zu verstehen.

Figur 9a zeigt die von der Stereokamera 10 gesehene Oberfläche beziehungsweise eine der Schnittansicht entsprechende Konturlinie ohne Segmente. Figur 9b illustriert die daraus mittels Δz-limitiertem Connected-Components-Labeling erzeugten zusammenhängenden Segmente 32. In Figur 9c sind jeweils noch die äußeren Kanten dieser Segmente 32 mit den gestrichelten Linien der optischen Sichtachsen 38 der Stereokamera 10 verbunden, um so die Abschattungen einzubeziehen.

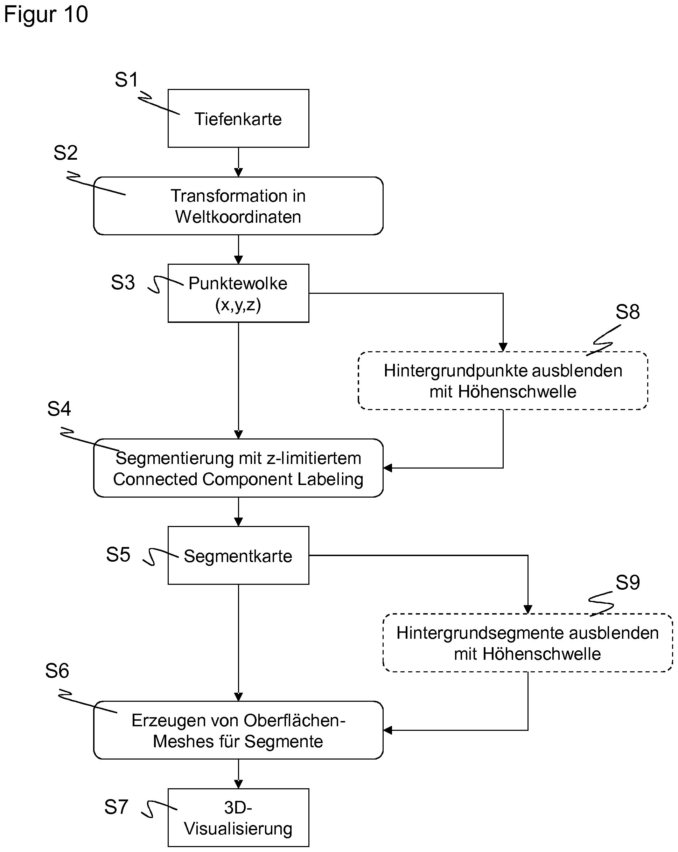

Figur 10 zeigt ein beispielhaftes Ablaufschema ähnlich Figur 4, das um zwei jeweils optionale Schritte S8, S9 zur Hintergrundsegmentierung ergänzt ist. Es sind also alle Ausführungsformen ohne diese Schritte S8, S9, mit nur einem Schritt S8 oder S9 oder mit beiden Schritten S8 und S9 denkbar. Die Schritte S1 bis S7 werden nicht erneut erläutert.

Eine erste mögliche Hintergrundsegmentierung nach Schritt S8 basiert bereits auf der Punktewolke. Mit Hilfe eines festen Grenzwerts, der einer Höhe H1 über der Bodenebene bei z=0 entspricht, werden Vorder- und Hintergrund voneinander getrennt. Alle Messpunkte unterhalb der Höhe H1 gehören zur Menge der Hintergrundpunkte und werden in Folgeschritten nicht verarbeitet. Der Schritt S8 kann wie dargestellt auf der bereits transformierten Punktewolke erfolgen oder alternativ vor der Transformation im Schritt S2. Dann muss allerdings die Höhe H1 in Distanzen d umgerechnet werden, die aufgrund der Zentralperspektive für eine feste Höhe über dem Boden nicht überall gleich sind.

Eine zweite mögliche Hintergrundsegmentierung nach Schritt S9 bewertet nicht mehr Messpunkte (x,y,z), sondern Segmente 32. Dabei wird ein Segment 32 als Hintergrund klassifiziert, wenn es unterhalb eines festen Grenzwerts liegt, der einer Höhe H2 über der Bodenebene z=0 entspricht. Das wird beispielsweise am höchsten Punkt des Segments 32 bewertet, also dem maximalen z über alle Punkte des Segments 32. Dadurch kann beispielsweise einer Mindest-Detektionshöhe Rechnung getragen werden. Alternativ bestimmt sich die Höhe eines Segments 32 an einem Durchschnitt, Schwerpunkt oder eines anderen geeigneten Maß. Die Höhe H2 ist ebenso wie H1 im Prinzip frei wählbar. Werden beide Schritte S8 und S9 durchgeführt, so ist aber nur H2 > H1 sinnvoll.

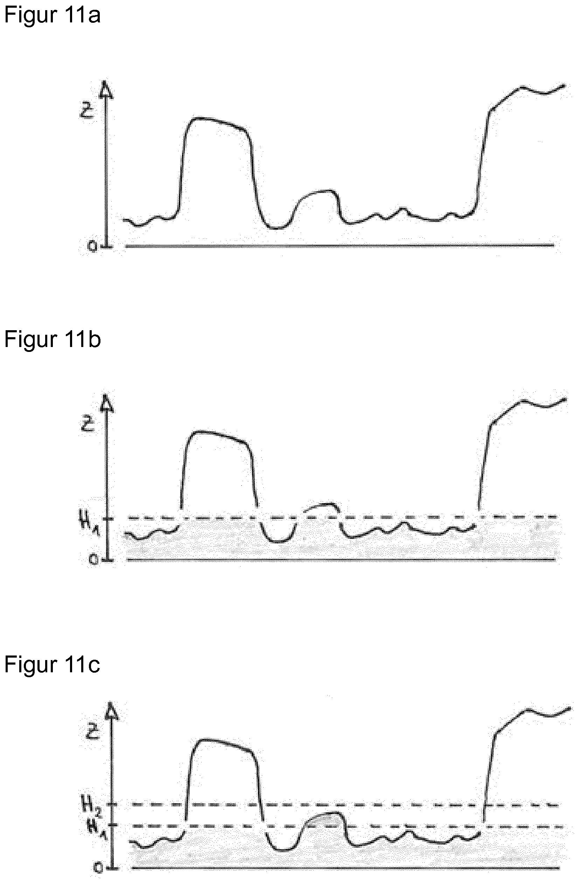

Figur 11 illustriert die Hintergrundsegmentierung. Figur 11a zeigt als Ausgangspunkt eine beliebige Konturlinie als Funktion der Höhe z über einer Linie auf dem Boden. In Figur 11b ist der Grenzwert bei H1 eingezeichnet. Die grau unterlegten Bereiche unterhalb von H1 sind Hintergrund. Nur Messpunkte des Vordergrunds aus dem Bereich oberhalb H1 werden beim Bilden von Segmenten 32 berücksichtigt. In Figur 11c ist zusätzlich der Grenzwert bei H2 eingezeichnet. Das mittlere Segment liegt unterhalb von H2 und wird deshalb als Hintergrund angesehen. Daraus wird auch der Unterschied zwischen den beiden Schritten S8 und S9 deutlich. Auch die beiden Segmente rechts und links liegen teilweise unterhalb von H2. Solche Punkte zwischen H1 und H2 werden aber anders als bei dem Vorgehen nach Schritt S8 nicht abgeschnitten, da die Segmente als Ganze kein Hintergrund sind.

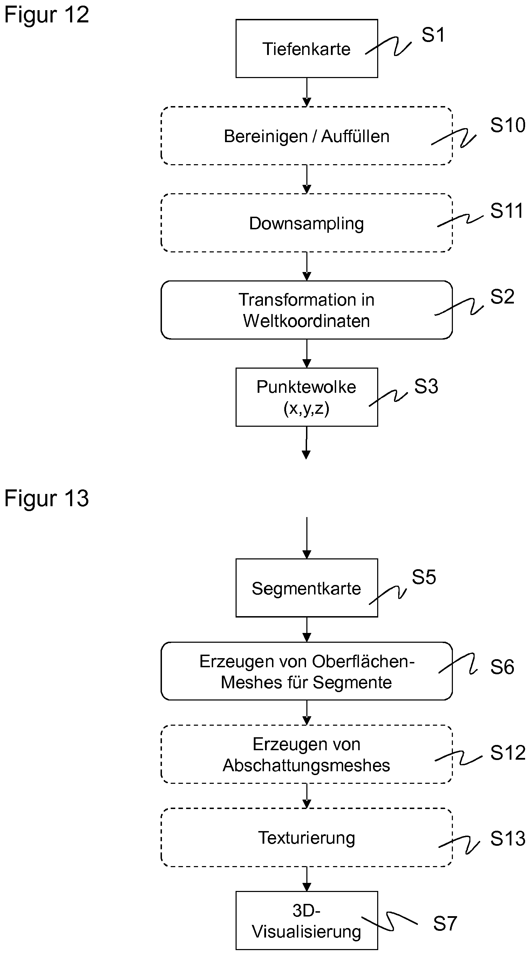

Figur 12 zeigt ein weiteres beispielhaftes Ablaufschema zur Erläuterung optionaler Vorverarbeitungsschritte. Das Ablaufschema entspricht dem oberen Teil von Figur 4 mit den Schritten S1 bis S3. Hinzu kommen zwei optionale Vorverarbeitungsschritte S10, S11, die einzeln oder gemeinsam ergänzt werden können.

In einem Schritt S10 kann die Tiefenkarte bereinigt oder aufgefüllt werden. Wie mehrfach erwähnt, kommt es aus verschiedenen Ursachen zu Fehlstellen oder Löchern in der Tiefenkarte. Es ist dann möglich, an diesen Fehlstellen Abstandswerte zu ergänzen, etwa durch Kopieren oder eine Interpolation von Nachbarwerten. Da es nur um das Visualisieren geht, ist dieses Vorgehen in Blindbereichen der Stereokamera 10 nicht sicherheitskritisch. Wird auf den Schritt S10 verzichtet, so werden Fehlstellen wahlweise in den Folgeschritten ganz weggelassen oder dort fiktive Messpunkte im Abstand Null direkt vor der Stereokamera 10 platziert, um eine worst-case-Annahme des Blindbereichs darzustellen. Kompliziertere Darstellungen, die vorzugsweise die Fehlstellen sofort als solche erkennbar machen, sind ebenfalls denkbar.

In einem Schritt S11 kann die Auflösung künstlich verringert werden (Downsampling), um so die Granularität der Visualisierung zu verändern oder die nachfolgenden rechenintensiven Schritte zu entlasten, besonders die Segmentierung S4 und das Meshing S6. Dadurch wird es möglich, auch bei hohen Auflösungen der Tiefenkarten und begrenzen Rechenkapazitäten eine flüssige und latenzarme Darstellung ohne große visuelle Einbußen zu gewährleisten. Downsampling bedeutet, dass ein gröberes (u,v,)-beziehungsweise (x,y)-Gitter gewählt wird und darin die Abstände d beziehungsweise Höhen z aus der ursprünglichen Nachbarschaft übernommen oder interpoliert werden. Insbesondere wird über den Median gemittelt. Ungültige Tiefenwerte bleiben dabei außen vor. Das Downsampling kann auch dynamisch geschehen, insbesondere abhängig von der Rechengeschwindigkeit des ausführenden Geräts oder der Komplexität der Szenerie. So kann auf einer Frame-zu-Frame-Basis insbesondere zwischen typischen Downsampling-Schrittweiten von 1x1, 2x2, 4x4 usw. gewechselt werden. Auslöser kann eine Benutzereingabe sein, aber auch die Feststellung, dass die aktuelle Framerate der Visualisierung einbricht.

Figur 13 zeigt ein weiteres beispielhaftes Ablaufschema zur Erläuterung optionaler Nachverarbeitungsschritte. Das Ablaufschema entspricht dem unteren Teil von Figur 4 mit den Schritten S5 bis S7. Hinzu kommen zwei optionale Nachverarbeitungsschritte S12, S13, die einzeln oder gemeinsam ergänzt werden können.

Schritt S12 ist die bereits oben erwähnte Erzeugung von Abschattungsmeshs 36. Dazu ist erforderlich, die entsprechenden Mesh-Dreiecke zwischen äußeren Kanten von Segmenten 32 zu erzeugen. Es ist vorteilhaft, dafür eine Kantenmaske zu erzeugen, die alle inneren und äußeren Kanten der Segmente 32 enthält. Auf Basis der Kantenmaske und der Werte in der Tiefenkarte werden dann Mesh-Dreiecke erzeugt, wobei im Gegensatz zu den Mesh-Dreiecken von Oberflächenmeshs 34 in einem Abschattungsmesh 36 die drei Punkte eines Mesh-Dreiecks zu mindestens zwei verschiedenen Segmenten 32 gehören. Der optionale Hintergrund aus den Schritten S8, S9 kann dabei als separates Segment betrachtet werden.

In einem Schritt S13 werden die Oberflächenmeshs 34 und/oder Abschattungsmeshs 36 mit einer Textur versehen. Die Textur zeigt vorzugsweise eine Höhencodierung durch Falschfarben oder Grauwerte an, sei es durch einfarbige Dreiecke mit einem für die Höhenlage des Dreiecks repräsentativen Wert oder sogar einem höhenabhängigen Farb- beziehungsweise Grauwertverlauf. Ein anderes Beispiel sind die tatsächlichen Texturen der Szenerie in dem Raumbereich 12, die beispielsweise aus den Ursprungsbildern der Kameramodule 14a, 14b gewonnen werden. Abschattungsmeshs 36 werden vorzugsweise auf eine besondere Weite texturiert, um sie sofort von Oberflächenmeshs 34 unterscheiden zu können, insbesondere durch halbtransparente Darstellung.

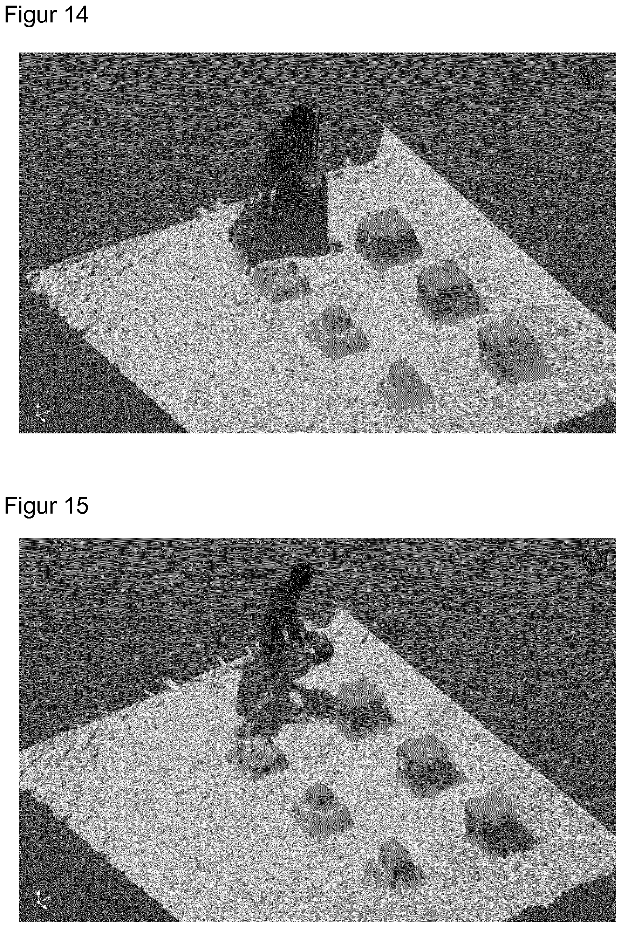

Die Figuren 14-16 illustrieren die erfindungsgemäße Visualisierung an beispielhaften 3D-Bilddaten eines 3D-Sensors. Dabei zeigt Figur 14 zum Vergleich zunächst Oberflächenmeshs ohne das Δz-limitierte Connected-Components-Labeling nach Schritt S4. Die Visualisierung basiert auf einer gemäß Schritt S10 bereinigten Tiefenkarte und weist eine höhenkodierte Texturierung gemäß Schritt S13 auf.

Für die Visualisierung nach Figur 15 wurde nun das Δz-limitierte Connected-Components-Labeling nach Schritt S4 durchgeführt, und Oberflächenmeshs 34 wurden nach Schritt S6 auf dieser Basis erzeugt. Die Vor- und Nachbearbeitungsschritte sind ansonsten gegenüber Figur 14 nicht verändert.

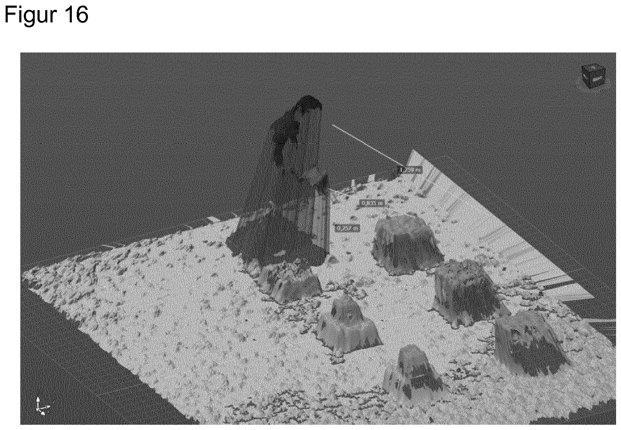

Bei der Visualisierung nach Figur 16 wurde gegenüber Figur 15 zum einen eine Hintergrundsegmentierung sowohl nach Schritt S8 als auch nach Schritt S9 durchgeführt. Das äußert sich in den klaren Objektgrenzen am Boden. Zudem wurden auch nach Schritt S12 Abschattungsmeshs 36 erzeugt und angezeigt. Einige noch zusätzlich visualisierte Sensormessdaten sind unbeachtlich.

## Patentansprüche

1. Verfahren zum Visualisieren von 3D-Bilddaten eines im Sinne von Sicherheitsnormen für Maschinensicherheit oder berührungslos wirkende Schutzeinrichtungen fehlersicher ausgelegten 3D-Sensors (10), wobei die 3D-Bilddaten eine Vielzahl von 3D-Punkten aufweisen, die eine laterale 2D-Anordnung mit einem jeweiligen Tiefenwert bilden, insbesondere eine Tiefenkarte, wobei aus verbundenen 3D-Punkten zusammenhängende Segmente (32) gebildet und die Segmente (32) angezeigt werden, wobei jeweils zwei 3D-Punkte in demselben Segment (32) verbunden werden, wenn sie lateral benachbart sind und sich zudem in ihrem Tiefenwert um höchstens eine Tiefenschwelle (Δz) unterscheiden,
**dadurch gekennzeichnet,**
**dass** für ein zusammenhängendes Segment (32) ein Oberflächenmesh (34) gebildet und das Segment (32) als das zugehörige Oberflächenmesh (34) angezeigt wird, dass ein Abschattungsmesh (36) für Abschattungsgrenzen (38) erzeugt und angezeigt wird und dass Oberflächenmesh (34) und Abschattungsmesh (36) visuell unterscheidbar sind, so dass in einer Sicherheitsanwendung Abschattungen erkennbar werden.

2. Verfahren nach Anspruch 1,
wobei 3D-Punkte lateral benachbart sind, wenn sie innerhalb der 2D-Anordnung nebeneinander, übereinander oder in diagonaler Nachbarschaft angeordnet sind, insbesondere innerhalb einer Achternachbarschaft liegen.

3. Verfahren nach Anspruch 1 oder 2, wobei Dreiecke des Oberflächenmeshs (34) aus 3D-Punkten gebildet werden, die schon in der lateralen 2D-Anordnung Dreiecke aus direkten Nachbarn bilden.

4. Verfahren nach einem der vorhergehenden Ansprüche, wobei eine Kantenmaske von inneren und äußeren Kanten der Segmente (32) erzeugt wird und Dreiecke des Abschattungsmeshs (36) auf Basis der Kantenmaske zwischen benachbarten, unterschiedlichen Segmenten (32) gebildet werden.

5. Verfahren nach einem der vorhergehenden Ansprüche, wobei das Oberflächenmesh (34) und/oder das Abschattungsmesh (36) mit einer Textur angezeigt wird, insbesondere einer tiefenwertabhängigen Farb- oder Graucodierung.

6. Verfahren nach einem der vorhergehenden Ansprüche, wobei die 3D-Punkte in Weltkoordinaten transformiert werden, insbesondere kartesische Weltkoordinaten mit einer Höhenachse (z) senkrecht zu einer Grundfläche.

7. Verfahren nach einem der vorhergehenden Ansprüche, wobei 3D-Punkte verworfen werden, deren Tiefenwert keiner Mindesthöhe (H1) über einer Grundfläche entspricht.

8. Verfahren nach einem der vorhergehenden Ansprüche, wobei zusammenhängende Segmente (32) verworfen werden, die keine Mindesthöhe (H2) über einer Grundfläche erreichen.

9. Verfahren nach einem der vorhergehenden Ansprüche, wobei Fehlstellen in der lateralen 2D-Anordnung, zu denen der 3D-Sensor (10) keinen gültigen Tiefenwert gemessen hat, mit 3D-Punkten aufgefüllt werden, deren Tiefenwert aus Tiefenwerten von benachbarten 3D-Punkten bestimmt wird.

10. Verfahren nach einem der vorhergehenden Ansprüche, wobei die Auflösung der lateralen 2D-Anordnung reduziert wird, indem aus den 3D-Punkten eine kleinere Anzahl von 3D-Punkten erzeugt wird, insbesondere in Abhängigkeit von aktuell verfügbaren Rechenkapazitäten und/oder dem Aufwand für das Visualisieren der aktuell aufgenommenen 3D-Bilddaten.

11. Verfahren nach einem der vorhergehenden Ansprüche, wobei die Visualisierung während der Aufnahme oder Übertragung von 3D-Bilddaten erfolgt.

12. Verfahren nach einem der vorhergehenden Ansprüche, wobei die 3D-Bilddaten von einer 3D-Kamera aufgenommen werden, insbesondere einer Stereokamera.

13. Optoelektronischer 3D-Sensor (10), insbesondere 3D-Kamera, der im Sinne von Sicherheitsnormen für Maschinensicherheit oder berührungslos wirkende Schutzeinrichtungen fehlersicher ausgelegt ist, mit mindestens einem Lichtempfänger (16a-b) zur Erfassung von 3D-Bilddaten aus einem Überwachungsbereich (12), einer Steuer- und Auswertungseinheit (24), die für ein Verfahren zum Visualisieren erfasster 3D-Bilddaten nach einem der vorhergehenden Ansprüche ausgebildet ist, und einer Anzeige zum Darstellen der 3D-Bilddaten.

## Claims

1. A method for visualizing 3D image data of a 3D sensor (10) that is configured failsafe in terms of safety standards for machine safety or electro-sensitive protective devices, wherein the 3D image data comprise a plurality of 3D points forming a lateral 2D arrangement with a respective depth value, in particular a depth map, wherein connected segments (32) are formed from connected 3D points and the segments (32) are displayed, wherein two respective 3D points are connected in the same segment (32) if they are laterally adjacent and also differ in their depth value by at most a depth threshold (z),
**characterized in that** a surface mesh (34) is formed for a connected segment (32) and the segment (32) is displayed as the associated surface mesh (34), **in that** a shadowing mesh (36) is generated and displayed for shadowing boundaries (38), and **in that** surface mesh (34) and shadowing mesh (36) are visually distinguishable so that shadowing is visible in a safety application.

2. The method according to claim 1,
wherein 3D points are laterally adjacent if they are arranged within the 2D arrangement side by side, one above the other or in diagonal proximity, in particular within an 8-neighborhood.

3. The method according to claim 1 or 2,
wherein triangles of the surface mesh (34) are formed from 3D points which already form triangles of direct neighbors in the lateral 2D arrangement.

4. The method according to any of the preceding claims,
wherein an edge mask of inner and outer edges of the segments (32) is generated and triangles of the shadowing mesh (36) are formed between adjacent, different segments (32) based on the edge mask.

5. The method according to any of the preceding claims,
wherein the surface mesh (34) and/or the shadowing mesh (36) is displayed with a texture, in particular a depth value dependent color or gray coding.

6. The method according to any of the preceding claims,
wherein the 3D points are transformed into world coordinates, in particular Cartesian world coordinates with a height axis (z) perpendicular to a base surface.

7. The method according to any of the preceding claims,
wherein 3D points whose depth value does not correspond to a minimum height (H1) above a base area are discarded.

8. The method according to any of the preceding claims,
wherein connected segments (32) which do not have a minimum height (H2) above a base area are discarded.

9. The method according to any of the preceding claims,
wherein missing points in the lateral 2D arrangement for which the 3D sensor (10) has not measured a valid depth value are filled with 3D points whose depth value is determined from depth values of adjacent 3D points.

10. The method according to any of the preceding claims,
wherein the resolution of the lateral 2D arrangement is reduced by generating a smaller number of 3D points from the 3D points, in particular depending on currently available computing capacities and/or the effort required for visualizing the currently acquired 3D image data.

11. The method according to any of the preceding claims,
wherein the visualization is carried out during the acquisition or transmission of 3D image data.

12. The method according to any of the preceding claims,
wherein the 3D image data is recorded by a 3D camera, in particular a stereo camera.

13. An optoelectronic 3D sensor (10), in particular 3D camera, which is configured failsafe in terms of safety standards for machine safety or electro-sensitive protective equipment, the sensor (10) comprising at least one light receiver (16a-b) for detecting 3D image data from a monitoring area (12), a control and evaluation unit (24) configured for a method for visualizing detected 3D image data according to any of the preceding claims, and a display for displaying the 3D image data.

## Revendications

1. Procédé de visualisation de données d'image 3D d'un capteur 3D (10) conçu pour être à sécurité intégrée au sens des normes de sécurité pour la sécurité des machines ou des dispositifs de protection agissant sans contact physique, les données d'image 3D présentant une multitude de points 3D qui constituent un agencement latéral 2D ayant une valeur de profondeur respective, en particulier une carte de profondeur, des segments cohérents (32) étant formés à partir de points 3D reliés, et les segments (32) étant affichés, deux points 3D respectifs étant reliés dans le même segment lorsqu'ils sont latéralement voisins et qu'ils diffèrent en outre au maximum d'un seuil de profondeur (Δz) quant à leur valeur de profondeur,
**caractérisé en ce qu'**un maillage de surface (34) est formé pour un segment cohérent (32), et le segment (32) est affiché en tant que maillage de surface associé (34), **en ce qu'**un maillage d'ombrage (36) pour des limites d'ombrage (38) est généré et affiché, et **en ce que** le maillage de surface (34) et le maillage d'ombrage (36) sont visuellement distincts, de sorte que des ombrages deviennent identifiables dans une application de sécurité.

2. Procédé selon la revendication 1,
dans lequel les points 3D sont latéralement voisins lorsqu'ils sont agencés les uns à côté des autres, les uns sur les autres ou en voisinage diagonal à l'intérieur de l'agencement 2D, en particulier lorsqu'ils se situent à l'intérieur d'un voisinage de huit.

3. Procédé selon la revendication 1 ou 2,
dans lequel des triangles du maillage de surface (34) sont formés à partir de points 3D qui forment des triangles de voisins directs déjà dans l'agencement latéral 2D.

4. Procédé selon l'une des revendications précédentes,
dans lequel un masque de bordure est créé à partir des bords intérieurs et extérieurs des segments (32), et des triangles du maillage d'ombrage (36) sont formés entre les différents segments (32) voisins sur la base du masque de bordure.

5. Procédé selon l'une des revendications précédentes,
dans lequel le maillage de surface (34) et/ou le maillage d'ombrage (36) est/sont affiché(s) avec une texture, en particulier avec un codage couleur ou codage gris dépendant de la valeur de profondeur.

6. Procédé selon l'une des revendications précédentes,
dans lequel les points 3D sont transformés en coordonnées universelles, en particulier en coordonnées universelles cartésiennes avec un axe de hauteur (z) perpendiculaire à une surface de base.

7. Procédé selon l'une des revendications précédentes,
dans lequel les points 3D dont la valeur de profondeur ne correspond pas à une hauteur minimale (H1) au-dessus d'une surface de base sont rejetés.

8. Procédé selon l'une des revendications précédentes,
dans lequel les segments cohérents (32) qui n'atteignent pas une hauteur minimale (H2) au-dessus d'une surface de base sont rejetés.

9. Procédé selon l'une des revendications précédentes,
dans lequel des lacunes dans l'agencement latéral 2D pour lesquelles le capteur 3D (10) n'a pas mesuré une valeur de profondeur valide sont remplies de points 3D dont la valeur de profondeur est déterminée à partir des valeurs de profondeur des points 3D voisins.

10. Procédé selon l'une des revendications précédentes,
dans lequel la résolution de l'agencement latéral 2D est réduite en générant un plus petit nombre de points 3D à partir des points 3D, en particulier en fonction des capacités de calcul actuellement disponibles et/ou du coût de visualisation des données d'image 3D actuellement acquises.

11. Procédé selon l'une des revendications précédentes,
dans lequel la visualisation s'effectue pendant l'acquisition ou la transmission de données d'image 3D.

12. Procédé selon l'une des revendications précédentes,
dans lequel les données d'image 3D sont acquises par une caméra 3D, en particulier une caméra stéréo.

13. Capteur optoélectronique 3D (10), en particulier caméra 3D, conçu(e) pour être à sécurité intégrée au sens des normes de sécurité pour la sécurité des machines ou des dispositifs de protection agissant sans contact physique, comportant au moins un récepteur de lumière (16a - b) pour acquérir des données d'image 3D depuis une zone à surveiller (12), une unité de commande et d'évaluation (24) réalisée pour mettre en œuvre un procédé de visualisation de données d'image 3D acquises selon l'une des revendications précédentes, et un affichage pour représenter les données d'image 3D.
